# EUROPÄISCHE PATENTSCHRIFT

(11) **EP 1 216 920 B1**
(45) Veröffentlichungstag und Bekanntmachung des Hinweises auf die Patenterteilung: **13.08.2003**
(21) Anmeldenummer: 01126185.6
(22) Anmeldetag: 05.11.2001
(51) Int. Cl.: B64D 11/00

(54) **Gepäckablage mit einem absenkbaren Gepäckfach, insbesondere für eine Flugzeugpassagierkabine**
Luggage rack with lowerable luggage container, particularly for aircraft passanger cabin
Coffre de rangement avec boîtier abaissable, particulièrement pour la cabine d'un avion de passager

(30) Priorität: 20.12.2000 DE 10063932
(43) Veröffentlichungstag der Anmeldung: 26.06.2002
(73) Patentinhaber: Airbus Deutschland GmbH, 21129 Hamburg (DE)
(72) Erfinder: Lau, Michael, 21739 Dollern (DE); Mattern, Michael, 21698 Harsefeld (DE); Schuld, Michael, 22083 Hamburg (DE)
(74) Vertreter: Hansmann, Dierk, Dipl.-Ing.

(56) Entgegenhaltungen:
- DE-A- 19 800 588
- GB-A- 2 074 016

## Beschreibung

Die Erfindung betrifft eine Gepäckablage mit einem absenkbaren Gepäckfach, wobei das Gepäckfach über mindestens ein Führungssystem an jeder Seite verfügt, welches zwischen Seitenwänden eines Flugzeugstrukturteiles und Seitenwänden des Gepäckfachs angeordnet ist und das Gepäckfach von einer oberen geschlossenen Position in eine untere offene Beladeposition absenkbar ist.

Gepäckfächer in Flugzeugpassagierkabinen sind üblicherweise über den Köpfen der sitzenden Passagiere angeordnet. Um einerseits eine optimale Kopffreiheit unter den Gepäckfächern und andererseits eine bequeme Zugänglichkeit zum Beladen zu gewährleisten, werden aus einem Gehäuse absenkbare Gepäckfächer verwendet. Beim Absenken wird die offene Frontseite des Gepäckfaches zum Beladen freigegeben. Um eine gute Zugänglichkeit zum Gepäckfach zu ermöglichen, erfolgt vorzugsweise beim Auf- und Abwärtsbewegen des Gepäckfaches eine Schwenkbewegung, wobei das Gepäckfach in Beladeposition zur Zugriffsrichtung leicht geneigt ist und die Beladekante etwas niedriger als die Hinterkante des Gepäckfachs angeordnet ist. Derartige Gepäckablagen sind mit einer Vielzahl von Ausgestaltungen des Führungssystems zum Absenken des Gepäckfachs aus dem Stand der Technik bekannt. Beispielsweise sind zur Führung der Bewegung des Gepäckfaches aus EP-PS 49 716 oder DE-OS 195 46 302 bekannte Viergelenksysteme nutzbar. Ein Hebelsystem, bestehend aus je einem seitlich der Gepäckschale angeordnetem Hebel, der über eine Torsionswelle mit dem jeweils anderen Hebel verbunden ist, und einer Linearführung zur Führung einer absenkbaren Gepäckschale aus dem Gehäuse der Gepäckablage in eine Beladeposition, ist in DE-OS 198 00 588 beschrieben. Aus EP-PS 594 997 ist ein Führungssystem bekannt, welches beidseitig an den Seitenwänden der Gepäckschale angeordnet ist und eine Führung der Auf- und Abwärtsbewegung mittels Zahnsegmenten realisiert. Die bekannten Führungssysteme sind in allen Fällen zwischen dem Gehäuse der Gepäckablage und der Wandung der Gepäckschale angeordnet. So ergibt sich in den bekannten Lösungen ein Platzbedarf für die Führungssysteme, der für eine Nutzung als Beladeraum für das Handgepäck nicht zur Verfügung stehen kann.

Der Erfindung liegt daher die Aufgabe zugrunde, für eine gattungsgemäße Gepäckablage den Platzbedarf für ein Führungssystem zu minimieren, um ein maximal mögliches Platzangebot für die Beladung mit Handgepäck zu ermöglichen. Die Führungssysteme sind mit wenigen und kostengünstigen Bauteilen zu realisieren.

Die oben definierte Aufgabenstellung wird bei einer gattungsgemäßen Gepäckablage durch die im Patentanspruch 1 genannten Maßnahmen gelöst.

Dabei ist insbesondere vorteilhaft, dass der benötigte Zwischenraum für das Führungssystem der Gepäckablage zwischen den Wandungen des Gehäuses und den Seitenwänden der Gepäckablage minimiert werden kann und der Beladeraum für das Handgepäck damit vergrößert wird. Das Führungssystem zum Absenken des Gepäckfachs ist durch einen einfachen Aufbau gekennzeichnet, was einen hohen wirtschaftlichen Vorteil in der Wartbarkeit und Kostenvorteile ermöglicht. Eine Leichtgängigkeit ohne eine Verkanten des Führungssystems beim Öffnen und Schließen des Gepäckfachs ist ebenfalls erreicht. Das Gepäckfach kann auf einer einfachen Bewegungskurve die Absenk- und Hochschwenkbewegung ausführen.

Weiterbildungen und vorteilhafte Ausgestaltungen sind in den Unteransprüchen 2 bis 7 angegeben sowie in der nachfolgenden Beschreibung erläutert.

Mit der Ausbildung der Gepäckablage gemäß des Anspruchs 2 kann neben der linearen Abwärtsbewegung auch eine Kippbewegung des Gepäckfachs erreicht werden, um eine Absenkung der Beladekante und damit eine bessere Zugänglichkeit zum Gepäckfach zu erreichen.
Mit der Maßnahme gemäß des Anspruchs 3 kann eine weitere Platzminimierung zwischen den Seitenwänden des Gehäuses und dem Gepäckfach erreicht werden.
Die Maßnahmen gemäß der Ansprüche 4 und 5 zeigen in einfacher Weise Möglichkeiten auf, um ein seitliches Verschieben des Gepäckfachs innerhalb des Gehäuses der Gepäckablage wirkungsvoll zu verhindern.
Das Vorsehen von Anschlägen bzw. Stoppern gemäß des Anspruchs 6 ermöglicht das variable Verändern des Öffnungsbereichs der Gepäckablage, womit eine hohe Flexibilität und einfache Anpassungen an Kundenwünsche ermöglicht ist.
Die in dem Anspruch 7 ausgeführte Weiterbildung erleichtert das Öffnen und Schließen der Gepäckablage, indem entgegen der Absenkbewegung des Gepäckfachs ein Dämpfungselement wirkt und beim Hochschwenken eine Hilfskraft zur Unterstützung der Hochschwenkbewegung der - im Beladungsfall häufig schweren - Gepäckschale bereitgestellt wird.

In der Zeichnung sind Ausführungsbeispiele der Erfindung dargestellt, die nachstehend anhand der Figuren 1 bis 5 näher beschrieben sind. In den Figuren sind gleiche Bauteile mit gleichen Bezugszeichen versehen.

Es zeigen:
- Fig. 1: eine Perspektivdarstellung einer erfindungsgemäßen Gepäckablage mit absenkbarem Gepäckfach,
- Fig. 2: eine Darstellung des Gepäckfaches als Einzelheit,
- Fig. 3: eine Darstellung des Gehäuses der Gepäckablage als Einzelheit,
- Fig. 4: die erfindungsgemäße Gepäckablage mit absenkbarem Gepäckfach in geschlossener Position in einer Ansicht von der Seite und
- Fig. 5: eine Darstellung gemäß Fig. 4 mit einer Ansicht der Beladeposition.

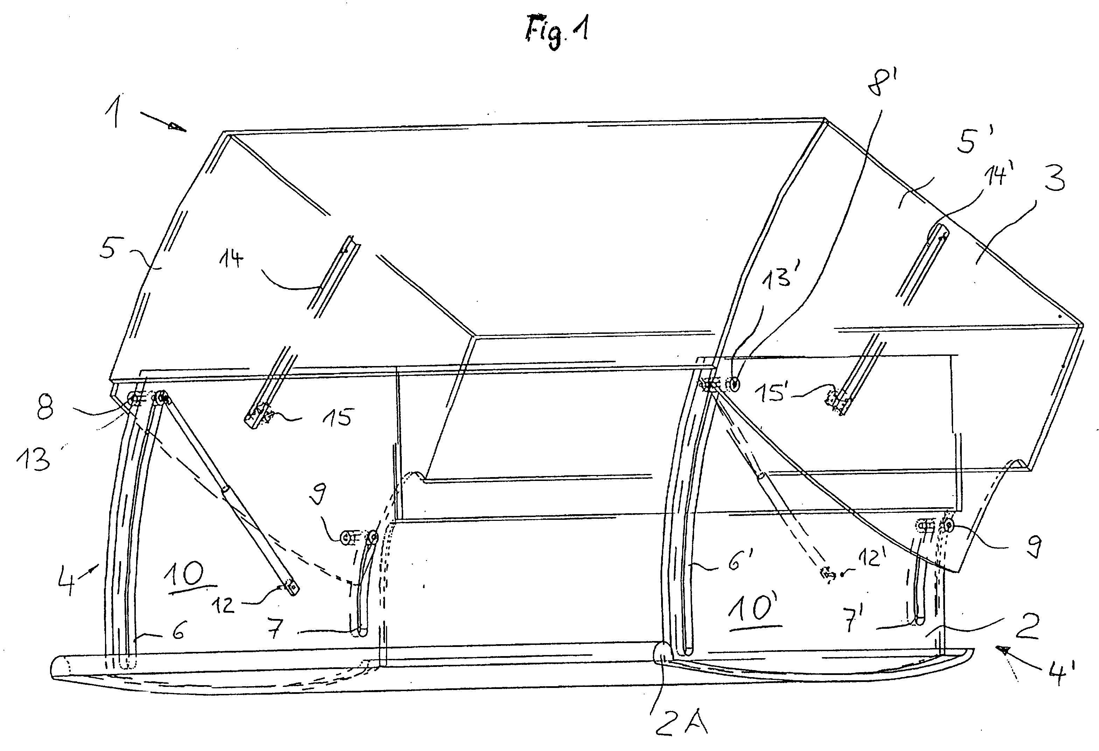

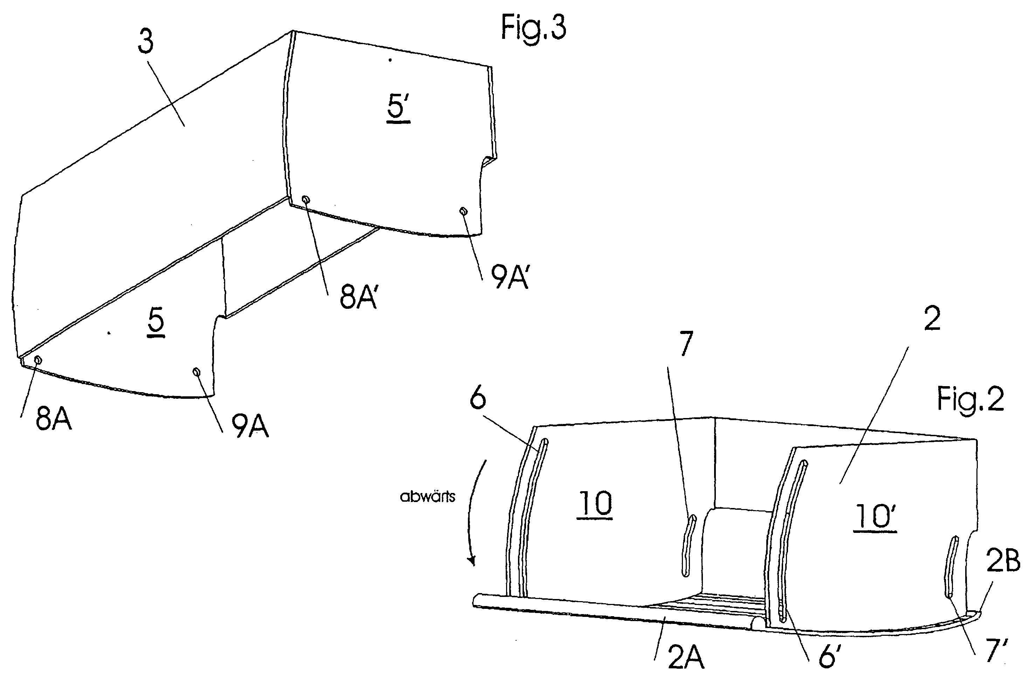

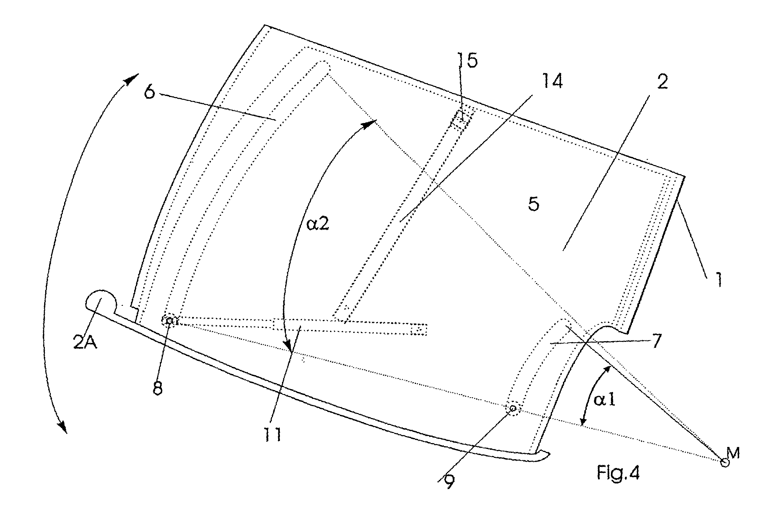

Die Figuren 1 bis 3 zeigen eine Perspektivdarstellung einer Gepäckablage 1, bei der ein Gepäckfach 2 mittels Führungs- und Haltesysteme 4, 4' von einer geschlossenen Stauposition innerhalb eines Gehäuses 3 in eine offene Beladeposition absenkbar ist. In der Figur 2 ist als Einzelheit das Gepäckfach 2 gezeigt, welches in Zugriffsrichtung eine offene Beladeöffnung aufweist, die durch Wandungen, insbesondere Seitenwände 10 und 10' begrenzt ist. In die Seitenwände 10 und 10' sind jeweils im vorderen Bereich und im hinteren Bereich in Abwärtsrichtung des Gepäckfachs 2 verlaufende Nuten 6 und 7 (bzw. 6' und 7') eingebracht. In Figur 3 ist das Gehäuse 3 gezeigt, welches das Gepäckfach 2 in geschlossener Stellung umschließt. Die Seitenwände des Gehäuses 3 sind mit Bezugszeichen 5 und 5' gekennzeichnet. Eingebracht sind in die Seitenwänden 5 und 5' Anschlusspunkte 8A und 9A (bzw. 8A' und 9A') zur Aufnahme von Führungsbolzen 8 und 9 (bzw. 8' und 9').
Die Führungs- und Haltesysteme 4 und 4' sind zwischen die bzw. integriert in die Seitenwände 5 und 5' des Gehäuses 3 und die Seitenwände 10 und 10' des Gepäckfachs 2 angeordnet und bilden das Halte- und Verbindungsglied zwischen dem an der Struktur, vorzugsweise Flugzeugstruktur, fixierten Gehäuse 3 und dem absenkbaren Gepäckfach 2. Auch eine Fixierung ohne Gehäuse 3, direkt an einem Flugzeugstrukturteil, ist denkbar. Die Führungs- und Haltessysteme 4 und 4' sind identisch aufgebaut.
In der Seitenwand 5 (bzw. 5') des Gehäuses 3 sind Führungsbolzen 8 und 9 (bzw. 8' und 9') vorgesehen. Die Führungsbolzen 8 und 9 sind fest an der Seitenwand 5 und die Führungsbolzen 8' und 9' sind fest an der Seitenwand 5' jeweils an den Anschlusspunkten 8A und 9A bzw. 8A' und 9A' fixiert. Die Führungsbolzen 8 und 9 sowie 8' und 9' sind zum Eingreifen in Nuten 6 und 7 sowie 6' und 7' des Gepäckfachs 2 vorgesehen. Die Nuttiefe der Nuten 6 und 7 (bzw. 6' und 7') entspricht in der bevorzugten Ausgestaltung der Wandstärke der Seitenwand 10 bzw. 10'. Damit sind durchgehende Aussparungen gebildet und die Führungsbolzen 8 und 9 können zur Sicherung gegen ein seitliches Verschieben des Gepäckfachs 2 und zur Sicherung der Führungsbolzen 8 oder 9 innerhalb der entsprechenden Nut 6 oder 7 auf der Gegenseite mit einer Kontermutter gesichert werden. Die Nuten 6 und 7 (bzw. 6' und 7') verlaufen jeweils auf einem Kreisbahnabschnitt, die einen gemeinsamen Kreismittelpunkt M (siehe in Fig. 4) aufweisen. Die vordere Nut 6 (bzw. 6') bildet dabei entsprechend einen größeren Radius sowie einen größeren Öffnungswinkel α als die hintere Nut 7 (bzw. 7') (α2>α1). Um eine gute Zugänglichkeit zum Gepäckfach 2 zu ermöglichen, erfolgt vorzugsweise beim Auf- und Abwärtsbewegen des Gepäckfaches 2 zunächst eine lineare Abwärtsbewegung und nach Erreichen der abgesenkten Position eine Kurvenbewegung, die ein leichtes Kippen des Gepäckfachs 2 in Richtung Beladeöffnung vorsieht. Die Beladekante 2A ist nach Erreichen der abgesenkten Position etwas niedriger als die Hinterkante 2B des Gepäckfachs 2 angeordnet und ein Zugriff zum Gepäckfach ist erleichtert. Zur Realisierung einer derartigen Bewegungskurve ist eine Schiene 14 (bzw. 14') innerhalb des Führungssystems 4 vorgesehen, in der eine Führungsrolle 15 bzw. 15') bewegbar angeordnet ist. Die Führungsschiene 14 ist an der Innenseite der Seitenwand 5 vom Gehäuse 3 (bzw. eine Führungsschiene 14' ist an der Seitenwand 5') angeordnet und wirkt mit der an der Seitenwand 10 (bzw. 10') drehbar befestigten Führungsrolle 15 (bzw. 15') zusammen. Bei einer Abwärtsbewegung bewegt sich die Führungsrolle 15 (bzw. 15') innerhalb der Führungsschiene 14 (bzw. 14') abwärts und damit wird das Gepäckfach 2 aus dem Gehäuse 3 linear abwärts bewegt. Wenn die Führungsrolle 15 den Endpunkt in der Führungsschiene 14 erreicht hat, erfolgt die Kippbewegung zum Erreichen einer besseren Zugänglichkeit, die dadurch realisiert wird, dass die vordere Nut 6 (bzw. 6') in Abwärtsrichtung eine Kreisbahn mit einem größeren Winkel aufweist als die hintere Nut 7 (bzw. 7'). Die Führungsbolzen 8 und 9 (bzw. 8' und 9') befinden sich in der geschlossenen Position des Gepäckfachs 2 innerhalb des Gehäuses 3 am unteren Endbereich der Nuten 6 und 7 (bzw. 6' und 7'). In der abgesenkten, noch nicht gekippten Stellung des Gepäckfachs 2 hat der Führungsbolzen 9 (bzw. 9') den oberen Endbereich der Nut 7 (bzw. 7') erreicht, der Führungsbolzen 8 (bzw. 8') ist jedoch noch nicht an seinem Endpunkt innerhalb der Nut 6 (bzw. 6') angekommen und um diesen Nutweg kippt das Gepäckfach 2 um einen Drehpunkt 7A bzw. 7'A (gebildet durch den Führungsbolzen 9 bzw. 9' am Endpunkt der Nut 7 bzw. 7') um die Differenz aus den Öffnungswinkeln α2- α1 leicht nach vorn.
In einer weiteren, nicht gezeigten Ausführung der Erfindung ist es auch möglich, durch Anschläge (Stopper) innerhalb der Nuten 6 und 7 (bzw. 6' und 7') oder auch an der Führungsschiene 14 (bzw. 14') die Höhe der Absenkung des Gepäckfachs 2 und/oder den Öffnungsbereich des Gepäckfaches 2 variabel zu gestalten.
Eine Unterstützungskraft, die das Öffnen und Schließen des Gepäckfachs 2 erleichtert, kann mit Hilfe einer Federeinrichtung, vorzugsweise einer Gasdruckfeder 11 erzeugt werden, wobei ein erster drehbarer Anschlusspunkt 12 an der Seitenwand 10 des Gepäckfachs 2 und der zweite drehbare Anschlusspunkt 13 der Gasdruckfeder 11 am festen Teil, d.h. am Gehäuse 3 - vorzugsweise am vorderen Führungsbolzen 8 - realisiert ist. Beim Öffnen des Gepäckfachs 2 wird eine Dämpfung der Abwärtsbewegung erreicht und beim Schließen liefert die Gasdruckfeder 11 eine Hilfskraft, die die zum Schließen des - im Beladezustand schweren - Gepäckfachs 2 notwendige Schließkraft unterstützt.

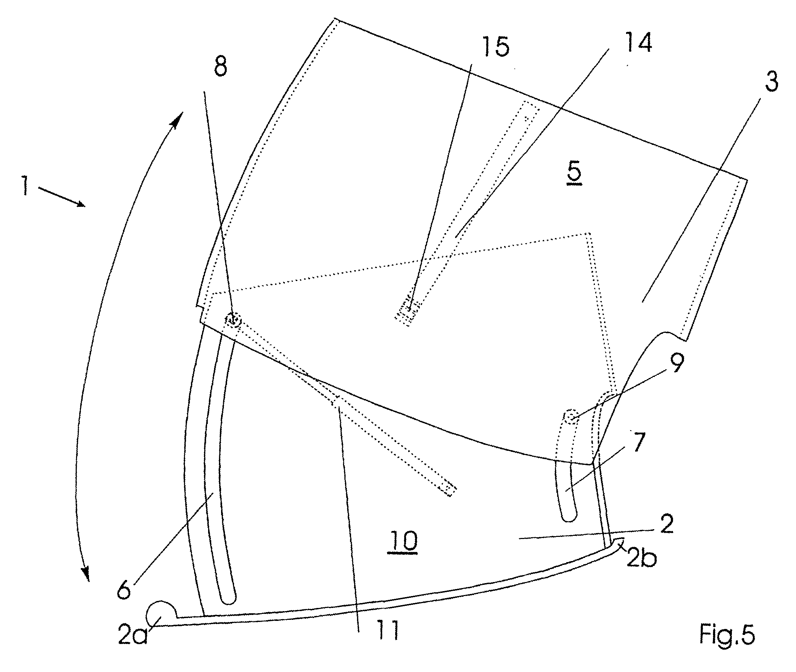

In den Figuren 4 und 5 ist eine Ansicht von der Seite auf die erfindungsgemäße Gepäckablage 1 ersichtlich. Die kinematischen Verhältnisse des Halte- und Führungssystems 4 sind in Fig. 4 bei geschlossener Position des Gepäckfachs 2 innerhalb des Gehäuses 3 und in Fig. 5 bei geöffnetem Gepäckfach 2 dargestellt. Neben der Kulissenführung der Führungsbolzen 8 und 9 in den Nuten 6 und 7 ist die Lage der linearen Führungsschiene 14 ersichtlich, die an der Seitenwand 5 des Gehäuses 3 angeordnet ist, um eine lineare Abwärtsbewegung des Gepäckfachs 2 ohne ein Verkanten desselben zu erreichen.

Das gezeigte Ausführungsbeispiel ist ein Beispiel einer möglichen Ausgestaltung der Erfindung. Das Prinzip des erfindungsgemäßen Führungssystems kann auch in anderer Form realisiert werden. So kann beispielsweise die Führungsrolle 15, die innerhalb der Führungsschiene 14 bewegbar ist, in einer weiteren, nicht gezeigten Ausgestaltung auch als Gleitstein ausgebildet sein, der in einer Kulisse bewegbar ist. Statt der Führungsschiene 14 kann in die Seitenwand 5 des Gehäuses 3 eine Aussparung als Kulisse eingebracht sein, in der eine Hochund Abwärtsbewegung eines Kulissensteins die Führungsfunktion erfüllt wird. Eine derartige Bauweise ermöglicht eine weitere Platzminimierung zwischen den Seitenwänden 5 und 10.
Auch ist es denkbar, die Nuten 6 und 7, anstatt in die Seitenwand 10 einzubringen, in der Seitenwand 5 vorzusehen und dafür die Führungsbolzen 8 und 9 im beweglichen Teil der Gepäckablage 1, d.h. am Gepäckfach 2 anzuordnen. Auch die Anordnung von Führungsschiene 14 (bzw. Kulisse) und Führungsrolle 15 (Kulissenstein) kann vertauscht werden, d.h. die Führungsschiene 14 wird an der Seitenwand 10 des Gepäckfachs 2 und die Führungsrolle 15 an der Seitenwand 5 des Gehäuses 3 vorgesehen.

## Patentansprüche

1. Gepäckablage (1) mit einem absenkbaren Gepäckfach (2), wobei die Gepäckablage (1) über mindestens ein Führungssystem (4, 4') an jeder Seite verfügt, welches zwischen Seitenwänden (5, 5') eines Flugzeugstrukturteils (Gehäuse 3) und Seitenwänden (10, 10') des Gepäckfachs (2) angeordnet ist und das Gepäckfach (2) von einer oberen geschlossenen Position in eine untere offene Beladeposition absenkbar ist, wobei das Führungssystem (4, 4') Nuten (6, 7, 6', 7') aufweist, die in eine Seitenwand (10, 10') eingebracht sind und an der jeweils anderen Seitenwand (5, 5') Führungsbolzen (8, 9, 8', 9') vorgesehen sind, die in die Nuten (6, 7, 6', 7') eingreifen, wobei eine vordere Nut (6, 6') und eine hintere Nut (7, 7') je Seitenwand (10, 10') vorgesehen sind und die Nuten (6, 7) jeweils einen Kreisbahnabschnitt beschreiben, der von einem gemeinsamen Kreismittelpunkt (M) ausgeht und das Führungssystem (4, 4') weiterhin eine Führungsschiene (14, 14') an einer Seitenwand aufweist, die mit einer an der gegenüberliegenden Seitenwand (10, 10') drehbar fixierten Führungsrolle (15, 15') zusammenwirkt und eine Linearführung bildet.

2. Gepäckablage nach Anspruch 1,
**dadurch gekennzeichnet, dass**
die Führungsbolzen (8, 9) in geschlossener Stellung des Gepäckfachs (2) am unteren Endbereich der Nuten (6, 7) angeordnet sind, während der Absenkbewegung innerhalb der Nut (6, 7) verlaufen und bei abgesenkter Stellung des Gepäckfachs (2) im oberen Endbereich der Nuten (6, 7) angeordnet sind, wobei nach Beendigung der linearen Abwärtsbewegung der Führungsbolzen (9, 9') in der hinteren Nut (7, 7') seinen Endpunkt (7A, 7A') erreicht hat und nunmehr um diesen Endpunkt (7A, 7A') eine Kippbewegung des Gepäckfachs (2) erfolgt, bis auch der Führungsbolzen (8, 8') in der vorderen Nut (6, 6') seinen Endpunkt erreicht hat.

3. Gepäckablage nach einem der Ansprüche 1 oder 2,
**dadurch gekennzeichnet, dass**
an jeder Seitenwand (5, 5') der Flugzeugstrukturteiles (3) oder des Gepäckfaches (2) statt der Führungsschiene (14, 14') eine Aussparung als Kulisse vorgesehen ist, die mit einem an der gegenüberliegenden Seitenwand (10, 10') drehbar fixierten Kulissenstein zusammenwirkt.

4. Gepäckablage nach einem der Ansprüche 1 bis 3,
**dadurch gekennzeichnet, dass**
die vordere Nut (6, 6') und die hintere Nut (7, 7') entsprechend der Wandstärke der Seitenwand (10, 10') durchgehende Aussparungen bilden und die in den Nuten (6,7, 6', 7') verlaufenden Führungsbolzen (8, 9, 8', 9') mit Sicherheitsmittel gegen seitliches Verschieben gesichert sind.

5. Gepäckablage nach einem der Ansprüche 1 bis 3,
**dadurch gekennzeichnet, dass**
die vordere Nut (6, 6') und die hintere Nut (7, 7') durch Aussparungen gebildet sind, die kleiner als die Wandstärke der Seitenwand (10, 10') sind und die in den Nuten (6,7, 6', 7') verlaufenden Führungsbolzen (8, 9, 8', 9') in diese Aussparungen eingreifen.

6. Gepäckablage nach einem der Ansprüche 1 bis 5,
**dadurch gekennzeichnet, dass**
innerhalb der Nuten (6, 7, 6', 7') und/oder der Führungsschiene/Kulisse (14, 14') Anschläge bzw. Stopper eingebracht sind.

7. Gepäckablage nach einem der vorangegangenen Ansprüche,
**dadurch gekennzeichnet, dass**
eine Feder- und/oder Dämpfungseinrichtung (11, 11') zur Unterstützung der Absenk- und Schließkraft des Gepäckfachs (2) vorgesehen ist.

## Claims

1. Luggage repository (1) having a luggage bin (2) which can be lowered; wherein the said luggage repository (1) has at least one guide system (4, 4') on each side, which guide system is disposed between side walls (5, 5') of a structural part of the aircraft (housing 3) and side walls (10, 10') of the luggage bin (2), and the said luggage bin (2) is capable of being lowered from an upper, closed position into a lower, open loading position; wherein the guide system (4, 4') has grooves (6, 7, 6', 7') which are incorporated into a side wall (10, 10') and there are provided, on the other side wall (5, 5') in each case, guide pins (8, 9, 8', 9') which engage in the said grooves (6, 7, 6', 7'); and wherein a front groove (6, 6') and a rear groove (7, 7') are provided per side wall (10, 10') and the said grooves (6, 7) describe, in each case, a section of a circular path, which section emanates from a common centre (M) of a circle, and the guide system (4, 4') also has a guide rail (14, 14') on one side wall, which guide rail interacts with a guide roller (15, 15') fixed in a rotatable manner on the opposing side wall (10, 10'), and forms a linear guide.

2. Luggage repository according to claim 1,
**characterised in that**
the guide pins (8, 9) are disposed at the lower end region of the grooves (6, 7) when the luggage bin (2) is in the closed position, run inside the groove (6, 7) during the lowering movement, and are disposed in the upper end region of the said grooves (6, 7) when the luggage bin (2) is in the lowered position, the guide bolt (9, 9') having reached its end point (7A, 7A') in the rear groove (7, 7') after the linear downward movement has been completed, and a tilting movement of the luggage bin (2) about the said end point (7A, 7A') now taking place until the guide bolt (8, 8') has also reached its end point in the front groove (6, 6').

3. Luggage repository according to one of claims 1 or 2,
**characterised in that**,
on each side wall (5, 5') of the structural part (3) of the aircraft, or of the luggage bin (2), there is provided, instead of the guide rail (14, 14'), a clearance in the form of a gate, which interacts with a sliding block fixed in a rotatable manner on the opposing side wall (10, 10').

4. Luggage repository according to one of claims 1 to 3,
**characterised in that**
the front groove (6, 6') and the rear groove (7, 7') are provided with through-clearances in a manner corresponding to the wall thickness of the side wall (10, 10'), and the guide pins (8, 9, 8', 9') running in the said grooves (6, 7, 6', 7') are secured, with the aid of safety means, against lateral displacement.

5. Luggage repository according to one of claims 1 to 3,
**characterised in that**
the front groove (6, 6') and the rear groove (7, 7') are formed by clearances which are smaller than the wall thickness of the side wall (10, 10'), and the guide pins (8, 9, 8', 9') running in the grooves (6, 7, 6', 7') engage in the said clearances.

6. Luggage repository according to one of claims 1 to 5,
**characterised in that**
stops or stoppers are incorporated inside the grooves (6, 7, 6', 7') and/or the guide rail/gate (14, 14').

7. Luggage repository according to one of the preceding claims,
**characterised in that**
a spring apparatus and/or damping apparatus (11, 11') is provided for assisting the lowering and closing force of the luggage bin (2).

## Revendications

1. Coffre à bagages (1) avec compartiment à bagages abaissable vers le bas (2), **caractérisé en ce que** le coffre à bagages (1) dispose d'au moins un système de guidage (4, 4') de chaque côté, disposé entre des parois latérales (5, 5') d'une partie structurelle d'un avion (bâti 3) et des parois latérales (10, 10') du compartiment à bagages (2), **en ce que** le compartiment à bagages (2) est abaissable à partir d'une position supérieure fermée jusque dans une position de chargement inférieure ouverte, **en ce que** le système de guidage comporte des rainures (6, 7, 6', 7') pratiquée dans une paroi latérale (10, 10'), **en ce que** des boulons de guidage (8, 9, 8', 9') s'enfonçant dans les rainures ont été prévus contre la paroi latérale opposée (5, 5'), **en ce que** une rainure antérieure (6, 6') et une rainure postérieure (7, 7') ont été prévues pour chaque paroi latérale (10, 10'), **en ce que** les rainures (6, 7) décrivent chacune une section orbitale partant d'un centre de cercle commun (M), et **en ce que** le système de guidage (4, 4') présente, sur une paroi latérale, un rail de guidage (14, 14') solidaire d'un rouleau de guidage (15, 15') fixé contre la paroi latérale opposée (10, 10'), de manière à pouvoir tourner, et formant un guidage linéaire .

2. Coffre à bagages selon la revendication 1, **caractérisé en ce que** les boulons de guidage (8,9) sont, en position fermée du compartiment à bagages (2), disposés contre la zone marginale inférieure des rainures (6, 7), **en ce que** ces mêmes boulons s'étendent à l'intérieur de la rainure (6, 7) lors de l'abaissement du compartiment, et **en ce que**, une fois le compartiment (2) abaissé, ces boulons se trouvent dans la zone marginale supérieure des rainures (6, 7). Une fois le mouvement linéaire vers le bas terminé, le boulon de guidage (9, 9') a atteint son point final (7A, 7A') dans la rainure postérieure (7, 7'). Un mouvement de basculement du compartiment à bagages (2) autour de ce point final (7A, 7A') s'en suit, jusqu'à ce que le boulon de guidage (8, 8') ait lui aussi atteint son point final dans la rainure antérieure (6, 6').

3. Coffre à bagages selon une des revendications 1 ou 2, **caractérisé en ce que** un évidement ou une coulisse a été prévue contre chaque paroi latérale (5, 5') de la partie structurelle de l'avion (3) ou du compartiment à bagages (2), en remplacement du rail de guidage (14, 14'). Cet évidemment ou cette coulisse est solidaire d'un coulisseau fixé contre la paroi latérale opposée (10, 10'), de manière à pouvoir pivoter.

4. Coffre à bagages selon une des revendications 1 à 3, **caractérisé en ce que** la rainure antérieure (6, 6') et la rainure postérieure (7, 7') forment des évidements continus en fonction de l'épaisseur de la paroi latérale (10, 10') et **en ce que** un moyen de sécurité empêche les boulons de guidage (8, 9, 8', 9') s'étendant dans les rainures (6, 7, 6', 7') de coulisser latéralement.

5. Coffre à bagages selon une des revendications 1 à 3, **caractérisé en ce que** la rainure antérieure (6, 6') et la rainure postérieure (7, 7') ont été formées par des évidements plus petits que l'épaisseur de la paroi latérale (10, 10') et **en ce que** les boulons de guidage (8, 9, 8', 9') s'étendant dans ces rainures (6, 7, 6', 7') s'enfoncent dans ces évidements.

6. Coffre à bagages selon une des revendications 1 à 5, **caractérisé en ce que** des butées ou arrêts ont été insérées à l'intérieur des rainures (6, 7, 6', 7') et / ou du rail de guidage / de la coulisse (14, 14').

7. Coffre à bagages selon une des revendications précédentes, **caractérisé en ce que** un dispositif de ressort et/ou d'amortissement (11, 11') a été prévu pour soutenir la force de descente et de fermeture du compartiment à bagages (2).
